# EUROPEAN PATENT APPLICATION

(11) **EP 4 231 386 A1**
(43) Date of publication of application: **23.08.2023**
(21) Application number: 23157112.6
(22) Date of filing: 16.02.2023
(51) Int. Cl.: H01M 4/36, H01M 4/62, H01M 10/0525, H01M 4/02

(54) **NEGATIVE ACTIVE MATERIAL FOR RECHARGEABLE LITHIUM BATTERY AND RECHARGEABLE LITHIUM BATTERY INCLUDING SAME**

(30) Priority: 18.02.2022 KR 20220021746
(71) Applicant: SAMSUNG SDI CO., LTD., Giheung-gu Yongin-si, Gyeonggi-do 17084 (KR); Research & Business Foundation SUNGKYUNKWAN UNIVERSITY, Jangan-gu, Suwon-si Gyeonggi-do 16419 (KR)
(72) Inventor: SHIN, Changsu, 17084 Yongin-si (KR); KIM, Youngugk, 17084 Yongin-si (KR); KIM, Young-Min, 17084 Yongin-si (KR); PARK, Sunil, 17084 Yongin-si (KR); WON, Jongmin, Yongin-si 17084 (KR); NAH, Jaehou, 17084 Yongin-si (KR); KANG, Eunji, 17084 Yongin-si (KR); OH, Doori, 17084 Yongin-si (KR); LEE, Dae-Hyeok, 17084 Yongin-si (KR); SONG, Hyun Jun, 16419 Suwon-si (KR); NAM, Myeong Gyun, 16325 Suwon-si (KR); YOO, Pil Jin, 06319 Seoul (KR)
(74) Representative: Taor, Simon Edward William

(57) **Abstract**

Disclosed is a negative active material for a rechargeable lithium battery and a rechargeable lithium battery including the same, and the negative active material includes a core including a silicon-carbon composite in which crystalline carbon, silicon particles and amorphous carbon are agglomerated, and a coating layer formed on a surface of the core, and including catecholamine.

## Description

### BACKGROUND OF THE INVENTION

### (a) Field of the Invention

It relates to a negative active material and a rechargeable lithium battery including the same.

### (b) Description of the Related Art

A rechargeable lithium battery has recently drawn attention as a power source for small portable electronic devices. The rechargeable lithium battery uses an organic electrolyte solution and thereby, have twice or more higher a discharge voltage than a conventional battery using an alkali aqueous solution and accordingly, has high energy density.

As for a positive active material of a rechargeable lithium battery, a lithium-transition metal oxide having a structure capable of intercalating/deintercalating lithium ions, such as LiCoO₂, LiMn₂O₄, LiNi₁₋ₓCoₓO₂ (0 < x < 1), and the like has been used.

As for negative active materials, various carbon-based materials capable of intercalating/deintercalating lithium ions such as artificial graphite, natural graphite, hard carbon, and the like have been used. However, the graphite negative active material has a low capacity of 360mAh/g, and thus, studies on silicon having four times or more capacity have been actively researched.

The above information disclosed in this Background section is only for enhancement of understanding of the background of the invention, and therefore it may contain information that does not form the prior art that is already known in this country to a person of ordinary skill in the art.

### SUMMARY OF THE INVENTION

One embodiment provides a negative active material for a rechargeable lithium battery which is capable of improving a cycle-life characteristic.

Another embodiment provides a rechargeable lithium battery including the negative active material.

One embodiment provides a negative active material for a rechargeable lithium battery including a core including a silicon-carbon composite in which crystalline carbon, silicon particles, and amorphous carbon are agglomerated, and a coating layer formed on a surface of the core. The coating layer includes catecholamine.

The catecholamine may include dopamine, norepinephrine, or a combination thereof.

The coating layer may have a thickness of about 1 nm to about 12 nm, and according to one embodiment, the coating layer may have a thickness of about 1 nm to about 10 nm.

The catecholamine may be bonded with an anion of SO₃⁻, CO₂⁻, OH⁻, or a combination thereof.

An amount of the catecholamine may be about 1 wt% to about 5 wt% based on a total of 100 wt% of the negative active material.

The silicon-carbon composite may include agglomerated products of crystalline carbon and silicon particles, and an amorphous carbon between the agglomerated products and/or on a surface of the agglomerated product.

Another embodiment provides a rechargeable lithium battery including a negative electrode including the negative active material, a positive electrode including a positive active material, and a non-aqueous electrolyte.

The negative electrode may include the negative active material as a first negative active material and may further include crystalline carbon as a second negative active material.

Other embodiments are included in the following detailed description.

According to an aspect, there is provided a negative active material as set out in claim 1. Additional features are set out in claims 2 to 7.

According to an aspect, there is provided a rechargeable lithium battery as set out in claim 8. Additional features are set out in claim 9.

The negative active material for a rechargeable lithium battery according to one embodiment may exhibit an excellent cycle-life characteristic.

### BRIEF DESCRIPTION OF THE DRAWINGS

FIG. 1 is a schematic view showing a structure of the rechargeable lithium battery according to one embodiment.
FIG. 2 is a graph showing thermo-gravimetric analysis for the negative active material of Example 1.
FIG. 3 is a graph showing FT-IR for the negative active material of Example 1.
FIG. 4 is a graph showing the cycle-life and efficiency of the rechargeable lithium cells according to Examples 1 and 4, and Comparative Example 1.
FIG. 5 is a graph showing impedance of the rechargeable lithium cell according to Comparative Example 1.
FIG. 6 is a graph showing impedance of the rechargeable lithium cell according to Example 4.
FIG. 7 is a graph showing impedance of the rechargeable lithium cell according to Example 1.
FIG. 8 is a graph showing X-ray diffraction intensity of the negative electrode after charging and discharging the rechargeable lithium cells according to Examples 1 and 4, and Comparative Example 1.

### DETAILED DESCRIPTION OF THE INVENTION

Hereinafter, embodiments are described in detail. However, these embodiments are only examples, so embodiments are not limited thereto and the present invention is defined by the scope of claims.

A negative active material for a rechargeable lithium battery includes a core and a coating layer formed on the core, and the core includes a silicon-carbon composite in which crystalline carbon, silicon particles, and amorphous carbon are agglomerated, and the coating layer includes catecholamine.

A silicon-carbon composite negative active material may severely form a SEI (Solid Electrolyte Interface) film which is generated by the reaction with an electrolyte during the charge and discharge, and thus the cycle-life may be deteriorated. In one embodiment, a non-conductive coating layer including catecholamine which is not structurally broken during the charge and the discharge and in which elastically is maintained, is formed on a surface of the silicon-carbon composite during the charge and discharge, so that the reaction between the silicon-carbon composite may be inhibited via the similar mechanism to the SEI (Solid Electrolyte Interface) film generated during the charge and discharge. Thus, the severe SEI film formation may be suppressed, thereby improving the cycle-life characteristic and charge and discharge efficiency, and reducing resistance.

In one embodiment, the effects from the coating layer including catecholamine which decreases in resistance and improvements in efficiency and cycle-life characteristic may be obtained when the silicon-carbon composite is used as the core. If the core is SiOₓ, or pure silicon, or carbon-based materials such as crystalline carbon, rather than the silicon-carbon composite, it does not have a functional group being capable of activating desolvation of lithium ion, and thus no selective transportation of lithium ions to the surface of the active material occurs so that the effects from the coating layer including catecholamine may not be realized.

The catecholamine may be dopamine, norepinephrine, or a combination thereof.

Furthermore, the catecholamine may also be in a form of a polymer. Accordingly, the catecholamine included in the coating layer according to the one embodiment is polycatechol, but for example, dopamine, polydopamine, norepinephrine, polynorepinephrine, etc., may be in any form.

The effects using the coating layer including catecholamine on the silicon-carbon composite may be increased by bonding an anion, such as SO₃⁻, CO₂⁻, OH⁻, or a combination thereof, to catecholamine to more facilitate the movement of lithium ions. According to one embodiment, the catecholamine may be bonded with an anion of SO₃⁻, CO₂⁻,OH⁻, or a combination thereof. For example, in one embodiment, the catecholamine included in the coating layer may be one in which at least one hydrogen of catecholamine may be substituted with a functional group such as SO₃⁻, CO₂⁻, OH⁻, or a combination thereof, and more specifically, at least one hydrogen of the benzene ring of catecholamine may be substituted with the functional group. This may indicate that SO₃⁻, CO₂⁻,OH⁻, or a combination thereof is grafted to catecholamine.

The inclusion of catecholamine in the negative active material according to one embodiment may be confirmed by thermogravimetric analysis (TGA) of the negative active material, as the coating layer including catecholamine may be decomposed or evaporated at a temperature range of 150 °C to 250 ° C under atmosphere. Such a coating layer is maintained in a battery fabricated using the negative active material with the coating layer, so that the presence of the coating layer may be confirmed by thermogravimetric analysis.

It may be seen by FT-IR (Fourier-Transform Infrared Spectroscopy) analysis that the anion is bonded to catecholamine included in the coating layer, which is a physical property that is maintained in a battery fabricated using the negative active material. The negative active material according to one embodiment may have a first peak occurring at about 1300 cm⁻¹ to about 1400 cm⁻¹ and a second peak occurring at about 1000 cm⁻¹ to about 1100 cm⁻¹ in FT-IR analysis.

In one embodiment, the coating layer may have a thickness of about 1 nm to about 12 nm, or in another embodiment, about 1 nm to about 10 nm, about 1 nm to about 8 nm, or about 1 nm to about 5 nm. When the thickness of the coating layer is within the range, the cycle-life characteristics owing to the coating layer may be more effectively improved without severe increases in resistance.

In one embodiment, an amount of the catecholamine may be about 1 wt% to about 5 wt% based on the total 100 wt% of the negative active material, about 1 wt% to about 4 wt%, or about 1 wt% to about 3.5 wt%. When the amount of catecholamine is within the range, the cycle-life characteristics owing to the coating layer may be more effectively improved.

The silicon-carbon composite may be one in which crystalline carbon, silicon particles, and amorphous carbon may be agglomerated. According to one embodiment, the silicon-carbon composite may include secondary particles in which a primary particle of at least one silicon nanoparticle and crystalline carbon are agglomerated, that is, an agglomerated product, and amorphous carbon may be filled between the agglomerated product to cover the surface of the primary particle or the surface of the secondary particle.

The amorphous carbon may be soft carbon, hard carbon, mesophase pitch carbide, sintered cokes, or a combination thereof. The crystalline carbon may be natural graphite, artificial graphite, or a combination thereof.

In the silicon-carbon composite, an amount of the silicon nanoparticle may be about 20 wt% to about 70 wt% based on the total of 100 wt% of the silicon-carbon composite, and in one embodiment, about 30 wt% to about 60 wt%. In the silicon-carbon composite, an amount of the amorphous carbon may be about 30 wt% to about 70 wt% based on the total of 100 wt% of the silicon-carbon composite and an amount of the crystalline carbon may be about 1 wt% to about 20 wt% based on the total of 100 wt% of the silicon-carbon composite.

The negative active material according to one embodiment may be prepared by the following procedure.

Silicon particles with a micrometer size are mixed with an organic solvent to prepare a dispersed liquid of silicon. Herein, the mixing is performed using a milling process to reduce from the silicon particles of micrometers to nanometers, thereby obtaining silicon nanoparticles. The milling process may be performed by a bead mill or a ball mill.

The organic solvent may be alcohols which do not oxidize to the silicon particles and may be readily volatilized, and examples thereof may be isopropyl alcohol, ethanol, methanol, butanol, propylene glycol, or a combination thereof.

A mixing ratio of the silicon particle and the organic solvent may be about 5:95 by weight ratio to about 30:70 by weight ratio, or about 10:90 by weight ratio to about 25:75 by weight ratio. When the mixing ratio of the silicon particles and the organic solvent is within the range, the milling efficiency may be maximized.

Crystalline carbon is admixed in the dispersed liquid of silicon. Herein, the mixing ration of silicon and crystalline carbon may be about 10:90 by weight ratio to about 95:5 by weight ratio, or about 20:80 by weight ratio to about 90:10 by weight ratio. The mixing ratio of the silicon and crystalline carbon satisfied in the range may allow to maintain the electrical resistance.

The crystalline carbon may natural graphite, artificial graphite, or a combination thereof.

The resulting mixture is spray-dried to prepare a Si precursor. The spray-drying may be performed at about 50 °C to about 200 °C. According to the spray-drying, secondary particles in which primary particles of silicon nanoparticles are agglomerated may be prepared. When the spray-drying is performed at the range of temperature, the preparation of the secondary particles by agglomerating primary particles may be more suitably performed.

The Si precursor is mixed with an amorphous carbon precursor.

A mixing ratio of the Si precursor and the amorphous carbon precursor may be about 80:20 by weight ratio to about 50:50 by weight ratio. When the mixing ratio of the Si precursor and the amorphous carbon precursor is within the range, amorphous carbon is not included in a final negative active material in an excessive amount, and thus the suitable silicon utilization rate may be obtained, thereby exhibiting better initial efficiency.

The amorphous carbon precursor may be coal-based pitch, meso pitch, mesophase pitch, petroleum-based pitch, meso carbon pitch, coal-based oil, petroleum-based heavy oil, a polymer resin such as a phenol resin, a furan resin, or a polyimide resin.

The resulting mixture is heat-treated to prepare a heat-treated product.

The heat treatment may be performed at about 700 °C to about 1100 °C for about 1 hour to about 5 hours. In the heat treatment, while the amorphous carbon precursor may be presented between the primary particles of silicon nanoparticles positioned on a surface portion, it may be formed to surround the surface of the secondary particles.

The heat treatment may be performed under an N₂ atmosphere or an argon atmosphere. When the heat treatment is performed under the atmosphere, the oxidation of silicon and the generation of SiC may be suppressed and amorphous carbon may be effectively formed, thereby effectively decreasing resistance of the negative active material.

The heat-treated product, catecholamine or a salt of catecholamine, a first solvent, a second solvent and a buffer are mixed.

The catecholamine may be dopamine, norepinephrine, or a combination thereof, and the salt of catecholamine may be dopamine hydrochloride, norepinephrine hydrochloride, or a combination thereof.

The first solvent may be ethanol, methanol, propanol, isopropanol, dimethylformamide, or a combination thereof, and the second solvent may be water.

The buffer may be tris(hydroxymethyl)aminomethane, phosphate buffered saline (PBS), morpholinopropane sulfonic acid, or a combination thereof. The buffer may be used as a liquid type and herein, a solvent may be water together with acids such as hydrochloric acid. If the buffer is used as a liquid type, a concentration may be about 1 wt% to about 2 wt%, but embodiments are not limited thereto.

A mixing ratio of the heat treatment product, and catecholamine or the salt of catecholamine may be about 1 to 10:1 by weight ratio, and a mixing ratio of the first solvent, and catecholamine or the salt of catecholamine may be about 250 to 2:1 by weight ratio. A mixing ratio of the second solvent, and catecholamine or the salt of catecholamine may be about 250 to 2:1 by weight ratio. When the mixing ratio of the heat-treated product, the first solvent, and the second solvent to catecholamine or the salt of catecholamine is adjusted within the range, a suitable product may be prepared.

The mixing may be performed for about 1 hour to about 4 hours. When the mixing is performed within the range of hours, a coating layer with a suitable thickness may be prepared.

The resulting mixture is filtrated and the filtrated product is dried. The drying may be performed at about 50 °C to about 150 °C. The dried product may include a core of the silicon-carbon composite and a coating layer formed on the core, and including catecholamine. Alternatively, the catecholamine may be also presented in a form of polycatecholamine.

The dried product itself may be used as a negative active material, but a product with a coating layer including catecholamine bonded with an anion by bonding the anion to catecholamine may be used as the negative active material.

The bonding of the anion may be performed by distributing the dried product in an anion-compound solution and adding an alkali thereto. The anion ion-compound solution may include sulfuric acid, persulfate, or a combination thereof, in the anion-compound solution, and a solvent may be water. The anion-compound solution may have a concentration of about 1 mM to about 30 mM. When the concentration of the anion-compound solution is satisfied in the range, the chemical oxidation of the silicon-carbon composite may be effectively suppressed and the anion may be well bonded (grafted) to a final surface of the coating layer including catecholamine, and thus, the lithium ions may be more easily transferred to inside the active material.

The alkali may be hydroxide salt, an ammonia aqueous solution, or a combination thereof. A used amount of the alkali may be about 0.01 equivalents to 1 equivalent based on 1 equivalent of the anion-compound. The hydroxide salt may be NH₄OH, tris(hydroxymethyl)aminomethane, or a combination thereof. The ammonia aqueous solution may have a concentration of about 15 wt% to about 35 wt%. When the used amount of the alkali is within the range, the sulfuric acid graft effect and the inhibition of oxidation-decomposition effect from the coating layer may be effectively obtained.

An amount of the dried product may be about 10 mg to about 100 mg per 1 ml of the anion-compound solution. When the amount of the dried product is within the range, an excellent effect of modifying the sulfuric acid functional group may be obtained.

The obtained product is agitated at about 80 °C to about 120 °C for about 3 hours to about 12 hours. The agitation under the temperatures and the conditions may effectively provide the excellent sulfuric acid functional group modification effects. Thereafter, the agitated product is filtrated and the filtrated product is dried to prepare a negative active material. The drying may be performed at about 50 °C to about 150 °C. When the drying is performed in the temperature range, the moisture may be further removed and the oxidation may be effectively prevented.

Another embodiment provides a rechargeable lithium battery including a negative electrode, a positive electrode, and an electrolyte.

The negative electrode may include a current collector and a negative active material layer including the negative active material according to one embodiment.

The negative active material layer may further include a crystalline carbon negative active material. The crystalline carbon negative active material may be unspecified shaped, sheet-shaped, flake-shaped, spherically-shaped, or fiber-shaped natural graphite or artificial graphite.

When the negative active material layer includes the negative active material according to one embodiment as a first negative active material, and crystalline carbon negative active material as a second negative active material, the first negative active material is positioned between the second negative active material particles to well contact the second negative active material, thereby more effectively inhibiting the expansion of the negative electrode. Herein, the mixing ratio of the first negative active material: the second negative active material may be about 1:99 by weight ratio to about 40:60 by weight ratio. When the first negative active material and the second negative active material are mixed and used in the range, the current density of the negative electrode may be further improved and the thin film electrode may be prepared. Furthermore, the first negative active material including silicon in the negative electrode may be more uniformly presented, and thus the negative electrode expansion may be more effectively suppressed.

In the negative active material layer, the amount of the negative active material may be about 95 wt% to about 99 wt% based on the total weight of the negative active material layer.

The negative active material layer includes a binder, and may further include a conductive material. In the negative active material layer, the amount of the binder may be about 1 wt% to about 5 wt% based on the total weight of the negative active material layer. Furthermore, when the conductive material is further included, about 90 wt% to about 98 wt% of the negative active material, about 1 wt% to about 5 wt% of the binder, and about 1 wt% to about 5 wt% of the conductive material may be used.

The binder improves binding properties of negative active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinylfluoride, polyurethane, polytetrafluoro ethylene, polyvinylidene fluoride, polyethylene, polypropylene, polyamide imide, polyimide, or a combination thereof.

The aqueous binder may be a styrene-butadiene rubber, an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polyepichlorohydrin, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the aqueous binder is used as a negative electrode binder, a cellulose-based compound may be further used to provide viscosity as a thickener. The cellulose-based compound includes one or more of carboxymethyl cellulose, hydroxypropyl methyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but embodiments are not limited thereto.

The negative electrode according one embodiment may be prepared by mixing

The positive electrode may include a current collector and a positive active material layer formed on the current collector.

The positive electrode active material may include lithiated intercalation compounds that reversibly intercalate and deintercalate lithium ions, specifically, one or more composite oxides of a metal selected from cobalt, manganese, nickel, and a combination thereof, and lithium, may be used. More specifically, the compounds represented by one of the following chemical formulae may be used. LiₐA_{1-b}X_{b}D¹₂ (0.90 ≤ a ≤ 1.8, 0 ≤ b ≤ 0.5); LiₐA_{1-b}X_{b}O_{2-c1}D¹_{c1} (0.90 ≤ a ≤ 1.8, 0 ≤ b ≤ 0.5, 0 ≤ c1 ≤ 0.05); LiₐE_{1-b}X_{b}O_{2-c1}D¹_{c1} (0.90 ≤ a ≤ 1.8, 0 ≤ b ≤ 0.5, 0 ≤ c1 ≤ 0.05); LiₐE_{2-b}X_{b}O_{4-c1}D¹_{c1} (0.90 ≤ a ≤ 1.8, 0 ≤ b ≤ 0.5, 0 ≤ c1 ≤ 0.05); LiₐNi_{1-b-c}Co_{b}X_{c}D¹_{α} (0.90 ≤ a ≤ 1.8, 0 ≤ b ≤ 0.5, 0 ≤ c ≤ 0.5, 0 < α ≤2); LiₐNi_{1-b-c}Co_{b}X_{c}O_{2-α}T_{α} (0.90 ≤ a ≤ 1.8, 0 ≤ b ≤ 0.5, 0 ≤ c ≤ 0.5, 0 < α < 2); LiₐNi_{1-b-c}Co_{b}X_{c}O_{2-α}T₂ (0.90 ≤ a ≤ 1.8, 0 ≤ b ≤0.5, 0 ≤ c ≤ 0.5, 0 < α < 2); LiₐNi_{1-b-c}Mn_{b}X_{c}D¹_{α} (0.90 ≤ a ≤ 1.8, 0 ≤ b ≤ 0.5, 0 ≤ c ≤ 0.5, 0 < α ≤2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.5, 0 < α < 2); LiₐNi_{1-b-c}Mn_{b}X_{c}O_{2-α}T₂ (0.90 ≤ a ≤ 1.8, 0 ≤ b ≤0.5, 0 ≤ c ≤ 0.5, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li _{(3-f)}J₂(PO₄)₃ (0 ≤ f ≤2); Li _{(3-f)}Fe₂(PO₄)₃ (0 ≤ f ≤ 2); and LiₐFePO₄ (0.90 ≤ a ≤ 1.8).

In the above chemical formulae, A is selected from Ni, Co, Mn, and a combination thereof; X is selected from Al, Ni, Co, Mn, Cr, Fe, Mg, Sr, V, a rare earth element, and a combination thereof; D' is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound, and for example, the method may include any coating method such as spray coating, dipping, and the like, but is not illustrated in more detail since it is well-known in the related field.

In the positive electrode, a content of the positive active material may be about 90 wt% to about 98 wt% based on the total weight of the positive active material layer.

In an embodiment, the positive active material layer may further include a binder and a conductive material. Herein, the binder and the conductive material may be included in an amount of about 1 wt% to about 5 wt%, respectively based on the total amount of the positive active material layer.

The binder improves binding properties of positive ctive material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene butadiene rubber, acrylated styrene butadiene rubber, an epoxy resin, nylon, and the like, but embodiments are not limited thereto.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, carbon fiber, and the like; a metal-based material of a metal powder or a metal fiber including copper, nickel, aluminum, silver, and the like; a conductive polymer such as a polyphenylene derivative; or a mixture thereof.

The current collector may use aluminum foil, nickel foil, or a combination thereof, but embodiments are not limited thereto.

The positive active material layer and the negative active material layer may be prepared by mixing an active material, a binder, and optionally a conductive material in a solvent to prepare an active material composition and coating the active material composition on a current collector. Such active material layer preparation will be known in the related arts and the detailed description is omitted in the specification. The solvent may be N-methylpyrrolidone, but embodiments are not limited thereto. Furthermore, if the aqueous binder is used in the negative active material layer, the solvent may be water as a solvent used in the negative active material composition preparation.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, propyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. Furthermore, the ketone-based solvent may include cyclohexanone and the like. The alcohol-based solvent may include ethyl alcohol, isopropyl alcohol, and the like, and examples of the aprotic solvent include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the organic solvent is used in a mixture, the mixture ratio may be controlled in accordance with desirable battery performance, and it may be well known to those skilled in the related art.

Furthermore, the carbonate-based solvent may desirably include a mixture with a cyclic carbonate and a linear carbonate. The cyclic carbonate and linear carbonate are mixed together in a volume ratio of about 1:1 to about 1:9, and when the mixture is used as an electrolyte, it may have enhanced performance.

When the non-aqueous organic solvents are mixed and used, a mixed solvent of a cyclic carbonate and a linear carbonate, a mixed solvent of a cyclic carbonate and a propionate-based solvent, or a mixed solvent of a cyclic carbonate, a linear carbonate, and a propionate-based solvent may be used. The propionate-based solvent may include methyl propionate, ethyl propionate, propyl propionate, or a combination thereof.

Herein, when a mixture of a cyclic carbonate and a linear carbonate, or a mixture of a cyclic carbonate and a propionate-based solvent, is used, it may be desirable to use it with a volume ratio of about 1:1 to about 1:9 considering the performances. Furthermore, a cyclic carbonate, a linear carbonate, and a propionate-based solvent may be mixed and used at a volume ratio of 1:1:1 to 3:3:4. The mixing ratios of the solvents may be appropriately adjusted according to desirable properties.

The organic solvent may further include an aromatic hydrocarbon-based solvent as well as the carbonate-based solvent. The carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

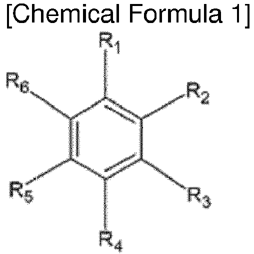

In Chemical Formula 1, R₁ to R₆ are the same or different and may each be selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate, an ethylene carbonate-based compound represented by Chemical Formula 2, as an additive for improving cycle life.

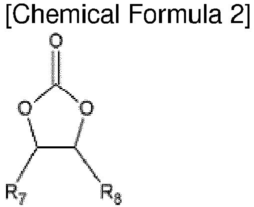

In Chemical Formula 2, R₇ and R₈ are the same or different and may each independently be hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. An amount of the additive for improving the cycle-life characteristics may be used within an appropriate range.

The electrolyte may further include vinylethylene carbonate, propane sultone, succinonitrile, or a combination thereof, and the used amount may be suitably controlled.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂), wherein x and y are natural numbers, for example, an integer of 1 to 20, LiCl, LiI and LiB (C₂O₄)₂ (lithium bis(oxalato) borate: LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. The separator may use polyethylene, polypropylene, polyvinylidene fluoride, or multilayers thereof having two or more layers, and may be a mixed multilayer such as a polyethylene/polypropylene double-layered separator, a polyethylene/polypropylene/polyethylene triple-layered separator, a polypropylene/polyethylene/polypropylene triple-layered separator, and the like.

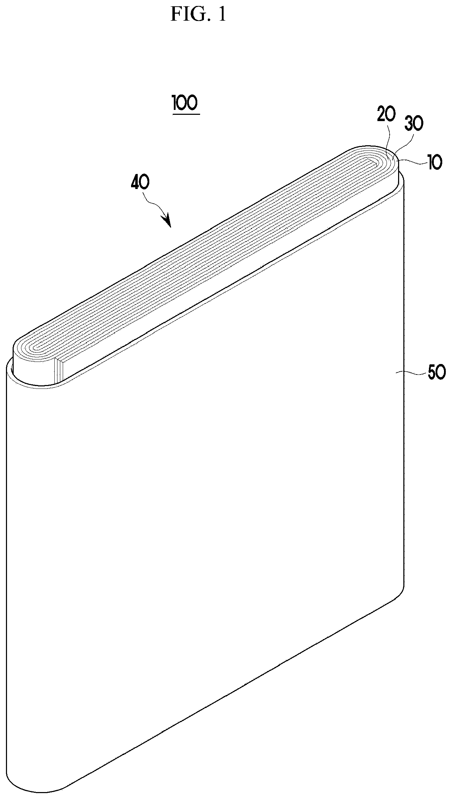

FIG. 1 is an exploded perspective view of a rechargeable lithium battery according to an embodiment. The rechargeable lithium battery according to an embodiment is illustrated as a prismatic battery but embodiments are not limited thereto, and may include variously-shaped batteries such as a cylindrical battery, a pouch battery, and the like.

Referring to FIG. 1, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20, and the separator 30.

Hereinafter, examples of the present invention and comparative examples are described. These examples, however, are not in any sense to be interpreted as limiting the scope of the invention.

### (Example 1)

An ethanol solvent and silicon particles having a particle diameter of several micrometers were mixed at a 9:1 weight ratio and a silicon nano dispersed liquid was prepared by using a bead mill (Netzsch, Germany).

An artificial graphite was added to the silicon nano-dispersed liquid at a 9:1 weight ratio and spray-dried at 170 °C using a spray-drier to prepare a Si precursor.

The Si precursor was mixed with meso pitch at a 50:50 by weight ratio and the mixture was heat-treated at 900 °C for 2 hours to prepare a silicon-carbon composite. The silicon-carbon composite included an agglomerated product which was a secondary particle in which artificial graphite and silicon nanoparticles were agglomerated and a soft-carbon coating layer formed on the agglomerated product. Herein, the amount of the artificial graphite was 40 wt% based on the total weight of the silicon-carbon composite, the amount of the silicon nanoparticles was 40 wt% based on the total weight of the silicon-carbon composite, and the amount of the amorphous carbon was 20 wt% based on the total weight of the silicon-carbon composite.

The silicon-carbon composite, dopamine hydrochloride, ethanol, distilled water and a tris(hydroxymethyl)aminomethane liquid were mixed at 4:1:2.5:2.47:0.03 by weight ratio and the mixture was mixed and then the resulting mixture was secondarily agitated for 2 hours. The tris(hydroxymethyl)aminomethane liquid was used by preparing by adding 12.114 g (0.1 M) of tris(hydroxymethyl)aminomethane and 6 ml of 1N hydrochloric acid to 1 L of water.

The secondary agitated product was filtrated and dried in an oven at 100 °C to prepare a dried product.

The obtained dried product was distributed in a 10 mM sulfuric acid aqueous solution at a ratio of 10 mg/ml to prepare a dispersed product and 2 equivalents of NaOH was added thereto per 5 equivalents of sulfuric acid.

The resulting material was thirdly agitated at 90 °C for 5 hours and filtrated followed by drying in an oven at 100 °C to prepare a negative active material.

The prepared negative active material included a silicon-carbon composite core and a coating layer formed on the core and including dopamine bonded with SO₃⁻, and the coating layer had a thickness of 2 nm and the amount of dopamine was 1.3 wt% based on the total of 100 wt% of the negative active material.

The negative active material was used as a first negative active material, and natural graphite was used as a second negative active material, and the first negative active material and the second negative active material, a styrene butadiene rubber binder, and carboxymethyl cellulose as a thickener were mixed at a 96:3:1 by weight ratio in a water solvent to prepare a negative active material slurry. Herein, the mixing ratio of the first negative active material and the second negative active material was 14:86 by weight ratio.

The negative active material slurry was coated on a Cu foil current collector and dried by the general procedure to prepare a negative electrode including the current collector and a negative active material layer formed on the current collector. The prepared negative active material layer had a loading level of 6.8 mg/cm², and the density of active mass (referred as a negative active material layer) was 1.33 g/ cm².

Using the negative electrode, a LiCoO₂ positive electrode, and an electrolyte, a rechargeable lithium cell was fabricated. As the electrolyte, 1.5M LiPF₆ dissolved in a mixed solvent of ethylene carbonate, ethylmethyl carbonate and dimethyl carbonate (20:10:70 volume ratio) was used.

### (Example 2)

A negative active material with the coating layer having a thickness of 3 nm and an amount of dopamine of 2.4 wt% based on the total of 100 wt% of negative active material, was prepared by the same procedure as in Example 1, except that the secondarily agitation was performed for 4 hours. Using the negative active material, a negative electrode and a rechargeable lithium cell were fabricated by the same procedure as in Example 1.

### (Example 3)

A negative active material with the coating layer having a thickness of 5 nm and an amount of dopamine of 3.5 wt% based on the total of 100 wt% of negative active material, was prepared by the same procedure as in Example 1, except that the secondarily agitation was performed for 5 hours. Using the negative active material, a negative electrode and a rechargeable lithium cell were fabricated by the same procedure as in Example 1.

### (Example 4)

The silicon-carbon composite prepared by Examine 1, dopamine chloride, ethanol, and distilled water were mixed at a 4:1:2.5:2.5 weight ratio and the mixture was secondarily agitated for 2 hours. The secondary agitated product was filtrated and dried in an oven at 100 °C to prepare a negative active material. Using the negative active material, a negative electrode and a rechargeable lithium cell were fabricated by the same procedure as in Example 1.

### (Comparative Example 1)

The silicon-carbon composite prepared by Example 1 was used as a negative active material. Using the negative active material, a negative electrode and a rechargeable lithium cell were fabricated by the same procedure as in Example 1.

### (Comparative Example 2)

A negative active material with a SiOₓ core and dopamine bonded with SO₃⁻ formed on the core and the coating layer having a thickness of 3 nm, was prepared by the same procedure as in Example 1, except that SiOₓ was used instead of the silicon-carbon composite. Using the negative active material, a negative electrode and a rechargeable lithium cell were fabricated by the same procedure as in Example 1.

### (Comparative Example 3)

A negative active material with a natural graphite core and dopamine bonded with SO₃⁻ formed on the core and the coating layer having a thickness of 3 nm, was prepared by the same procedure as in Example 1, except that natural graphite was used instead of the silicon-carbon composite. Using the negative active material, a negative electrode and a rechargeable lithium cell were fabricated by the same procedure as in Example 1.

### (Experimental Example 1) Measurement of the presence or absence of a coating layer in the negative active material

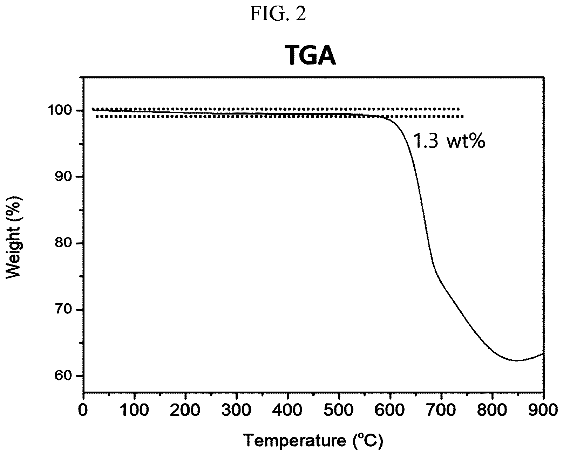

The thermogravimetric analysis (TGA) for the negative active material prepared by Example 1 was measured. The results are shown in FIG. 2. The thermogravimetric analysis measurement was performed by increasing a temperature from a room temperature (25 °C) to 900 °C at an increasing rate of 10 °C/min.

As shown in FIG. 2, when the temperature was increased to about 600 °C, the amount of the negative active material was reduced by about 1.3 wt%, which indicates that dopamine was thermally decomposed to remove it, and thus, it can be seen from the results that the coating layer formed in the negative active material was to be about 1.3 wt%.

### (Experimental Example 2) Measurement of FT-IR of negative active material

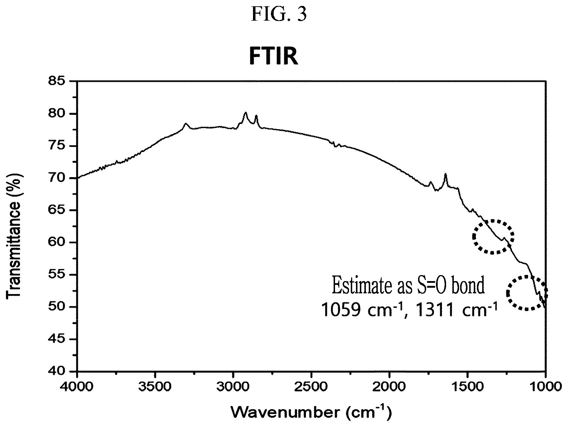

The FT-IR for the negative active material prepared by Example 1 was measured. The results are shown in FIG. 3. As shown in FIG. 3, the peak corresponding to a S=O bond at about 1059 cm⁻¹ and about 1311 cm⁻¹ occurred, which indicated SO₃⁻ bonded to the coating layer.

In ICP-OES (inductively coupled plasma-optical emission spectrometry) analysis for the negative active material prepared by Example 1, sulfur is detected at about 0.1 wt% based on the total weight of the negative active material, and thus it can be seen that anions of sulfur bonded to the negative active material.

### (Experimental Example 3) Evaluation of efficiency and cycle-life of cell

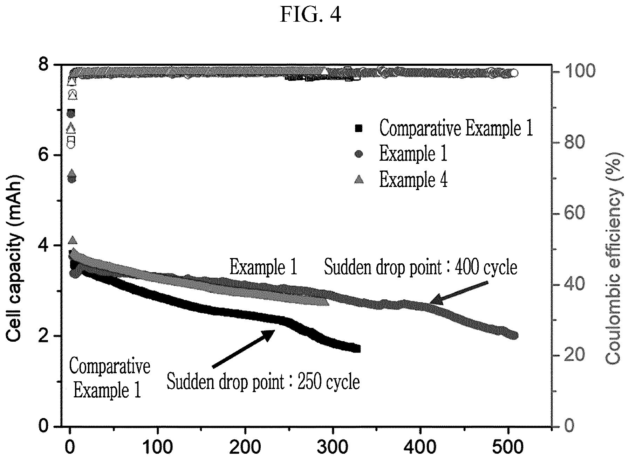

The rechargeable lithium cells according to Examples 1 to 4 and Comparative Examples 1 to 3 were charged and discharged at 1 C for 400 cycles. The discharge capacity at each cycle was measured. Among these results, the results of Examples 1 and 4 and Comparative Example 1 are shown in FIG. 4.

In FIG. 4, the filled circle represents discharge capacity and the empty circle represents coulomb efficiency.

The coulomb efficiency which is ratio of discharge capacity to charge capacity at each cycle was calculated. From these results, the results of Examples 1 to 3 and Comparative Examples 1 to 3 are shown in Table 1.

Using the discharge capacity at 1^{st} charge and discharge as a specific capacity, the results of Examples 1 to 3 and Comparative Examples 1 to 3 are shown in Table 1.

As shown in FIG. 4 and Table 1, Examples 1 and 4 and Comparative Example 1 all exhibited better coulomb efficiency. However, capacity according to charge and discharge, i.e., capacity retention, was suddenly dropped (fading of capacity retention to be 60 % or less) in Examples 1 and 4 after 400 cycles, but in Comparative Example 1 after 250. Comparative Example 2 exhibited low coulomb efficiency and cycle-life retention and Comparative Example 3 exhibited significantly deteriorated coulomb efficiency and cycle-life retention.

**Table 1**

| | Specific capacity (mAh/g) | Efficiency (%) | Cycle-life retention (100^{th} cycle, %) |
|---|---|---|---|
| Example 1 | 1450 | 87 | 85 |
| Example 2 | 1410 | 86.5 | 82 |
| Example 3 | 1405 | 87.5 | 90 |
| Comparative Example 1 | 1500 | 87 | 65 |
| Comparative Example 2 | 1590 | 72 | 72 |
| Comparative Example 3 | 1510 | 70.5 | 51 |

### (Experimental Example 4) Measurement of impedance

Using the negative electrodes of Comparative Example 1, Example 4, and Example 1, a lithium metal counter electrode, and an electrolyte, a half-cell was fabricated. Herein, as the electrolyte, 1.5 M LiPF₆ dissolved in a mixed solvent of ethylene carbonate, ethylmethyl carbonate and dimethyl carbonate (20:10:70 volume ratio) was used.

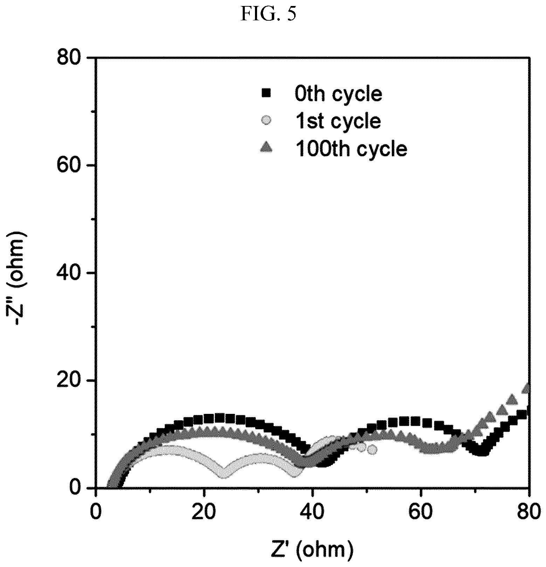

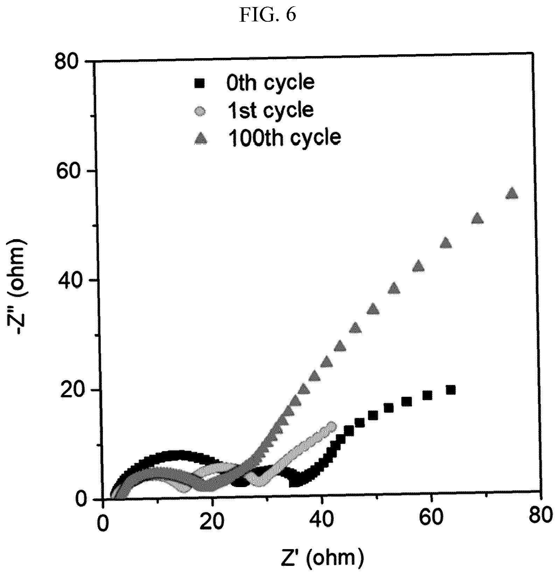

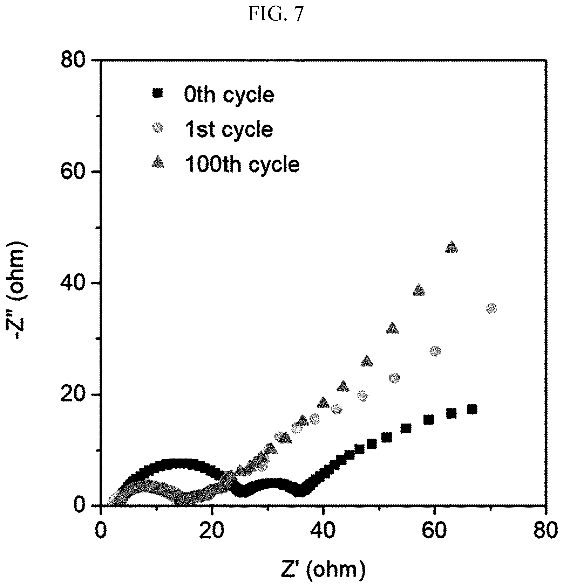

The half-cell was charged and discharged at 1 C 100 times, impedance before charge and discharge, impedance after charging and discharging once, and impedance after charging and discharging 100 times were measured by the EIS (electrochemical impedance spectroscopy) method. The result of Comparative Example 1 is shown in FIG. 5, the result of Example 4 is shown in FIG. 6, and the result of Example 1 is shown in FIG. 7.

As shown in FIG. 5 to FIG. 7, the initial areas up to 20 ohms after 100 cycles of Examples 4 and 1 appeared smaller than that of Comparative Example 1, and it indicates that the impedance value was significantly reduced.

### (Experimental Example 5) Evaluation of XRD characteristic

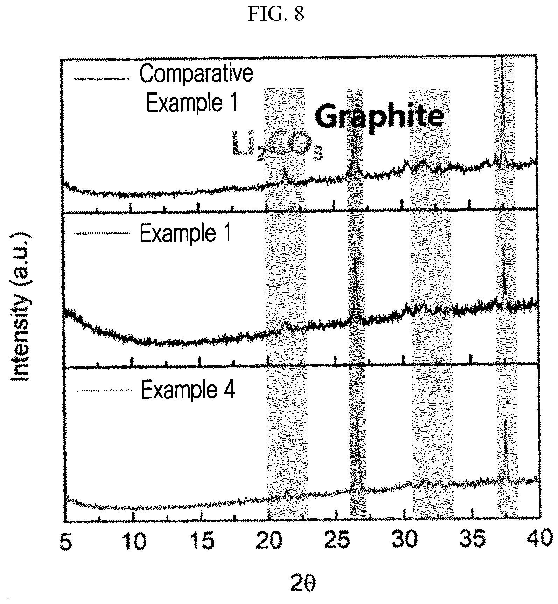

The rechargeable lithium cells prepared by Examples 1 and 4 and Comparative Example 1 were charged and discharged at 1 C 100 times and the negative electrodes were separated and obtained. The X-ray diffraction peak intensity of the negative electrode was measured by using a CuKα ray. The results are shown in FIG. 8. As shown in FIG. 8, the formation of the coating layer including dopamine causes a surprisingly reduction of a peak related to Li₂CO₃. It can be seen from these results that the severe formation of the generation of the SEI film was suppressed, that is, the side reaction of the electrolyte was suppressed.

As discussed, embodiments can provide a negative active material for a rechargeable lithium battery, comprising a core comprising a silicon-carbon composite in which crystalline carbon, silicon particles, and amorphous carbon are agglomerated, and a coating layer formed on a surface of the core, and including catecholamine.

Embodiments can provided a rechargeable lithium battery, comprising a negative electrode comprising a negative active material for a rechargeable lithium battery, comprising a core comprising a silicon-carbon composite in which crystalline carbon, silicon particles, and amorphous carbon are agglomerated, and a coating layer formed on a surface of the core, and including catecholamine; a positive electrode comprising a positive active material; and a non-aqueous electrolyte

While this invention has been described in connection with what is presently considered to be practical example embodiments, it is to be understood that the invention is not limited to the disclosed embodiments, but, on the contrary, is intended to cover various modifications and equivalent arrangements included within the scope of the appended claims. Therefore, the aforementioned embodiments should be understood to be examples and not limiting the present invention in any way.

## Claims

1. A negative active material for a rechargeable lithium battery, comprising:
a core comprising a silicon-carbon composite in which crystalline carbon, silicon particles, and amorphous carbon are agglomerated; and
a coating layer formed on a surface of the core, and including catecholamine.

2. The negative active material for a rechargeable lithium battery of claim 1, wherein the catecholamine comprises dopamine, norepinephrine, or a combination thereof.

3. The negative active material for a rechargeable lithium battery of claim 1 or 2, wherein the coating layer has a thickness of about 1 nm to about 12 nm.

4. The negative active material for a rechargeable lithium battery of any of claims 1 to 3, wherein the coating layer has a thickness of about 1 nm to about 10 nm.

5. The negative active material for a rechargeable lithium battery of any of claims 1 to 4, wherein the catecholamine is bonded with an anion of SO₃⁻, CO₂⁻, OH⁻ or a combination thereof.

6. The negative active material for a rechargeable lithium battery of any of claims 1 to 5, wherein an amount of the catecholamine is about 1 wt% to about 5 wt% based on a total of 100 wt% of the negative active material.

7. The negative active material for a rechargeable lithium battery of any of claims 1 to 6, wherein the silicon-carbon composite includes agglomerated products of the crystalline carbon and silicon particles, and an amorphous carbon between the agglomerated products or on a surface of the agglomerated products.

8. A rechargeable lithium battery, comprising:
a negative electrode comprising the negative active material of any one of claims 1 to 7;
a positive electrode comprising a positive active material; and
a non-aqueous electrolyte.

9. The rechargeable lithium battery of claim 8, wherein:
the negative electrode comprises the negative active material as a first negative active material and further comprises crystalline carbon as a second negative active material.
